# EUROPEAN PATENT SPECIFICATION

(11) **EP 1 678 260 B1**
(45) Date of publication and mention of the grant of the patent: **12.12.2007**
(21) Application number: 04769014.4
(22) Date of filing: 25.10.2004
(51) Int. Cl.: C09C 1/26

(54) **HYBRIDISED PIGMENT**
HYBRIDISIERTES PIGMENT
PIGMENT HYBRIDE

(30) Priority: 31.10.2003 GB 0325475
(43) Date of publication of application: 12.07.2006
(73) Proprietor: Holliday Pigments Limited, Kingston Upon Hull HU8 8DN (GB)
(72) Inventor: THAMBY, Subramaniam, Balasubaramaniam, K., Huddersfield, West Yorkshire HD1 4JJ (GB); CALVERT, D. J., 1 Old Chapel Close, East Yorkshire HU11 5LA (GB)
(74) Representative: Atkinson, Jonathan David Mark
(86) International application number: PCT/GB2004/004506
(87) International publication number: WO 2005/052069

(56) References cited:
- US-B1- 6 533 857
- DATABASE CA [Online] CHEMICAL ABSTRACTS SERVICE, COLUMBUS, OHIO, US; 1999, KOWALAK, S. ET AL: "Zeolite matrices for pigments" XP002313628 retrieved from STN Database accession no. 132:209172 & STUDIES IN SURFACE SCIENCE AND CATALYSIS , 125(POROUS MATERIALS IN ENVIRONMENTALLY FRIENDLY PROCESSES), 753-760 CODEN: SSCTDM; ISSN: 0167-2991, 1999,

## Description

This invention relates to pigments and methods of manufacture thereof.

Inorganic pigments, particularly ultramarine pigments are well known for their unique shades and clean bright appearance. However there is a disadvantage that the colour is weak in comparison to organic pigments. Ultramarine blue has a unique shade but in blends the clean appearance of the pigment is lost. Higher loadings are necessary for applications such as plastics, inks and paints. Ultramarine pigments are known to be unstable and decompose under acid conditions. However it has been surprisingly discovered that addition of ultramarine after acidification of the basic dye solution leads to a hybridised pigment without decomposition of the ultramarine component.

According to the present invention, a method of making a pigment composition comprises the step of making a pigment selected from:
(i) a ferrocyanide derivative substituted with one or more cationic dye groups in the presence of a suspension of a zeolite pigment in an acidified solution; and
(ii) a derivative of a complex acid selected from the group consisting of: silicomolybdate, phosphomolybdate, phosphotungstate, phosphotungstomolybdate and mixtures thereof substituted with one or more cationic dye groups, in the presence of a suspension of a zeolite pigment in an acidified solution.

When a ferrocyanide derivative is employed, the ferrocyanide derivative may have the formula (1):

Mₚ(Fe(CN)₆)(Z)_{q}(D), (1)

wherein M is a transition metal selected from a copper, nickel or vanadium in a reduced state; Z is a zeolite structure, preferably a zeolite pigment or calcined clay, more preferably an ultramarine base;
D is a cationic dye;
and p, q and r are integers from 1 to 3 wherein the total of p + q + r = 4

When a complex acid derivative or mixtures thereof are employed, the complex acid derivative may have the formula (2),

A(Z)_{q}(D)_{R} (2);

wherein A is a complex acid;
Z and D are as defined in formula 1; and q and r are integers from 1 to 7 wherein q + r is 4 to 7.

Alternatively q and r are integers from 1 to 3 and q+r = 4

According to a preferred aspect of the present invention a method of making a pigment composition comprises the step of making a ferrocyanide derivative preferably copper ferrocyanide substituted with one or more cationic dyes, and mixtures thereof, in the presence of a zeolite pigment or calcined clay in an acidified solution.

The zeolite pigment is preferably selected from ultramarine blue, pink, violet or green, especially ultramarine blue. Alternatively, if a pure bright colour outside the ultramarine zeolite range is desired, an activated or calcined clay can be used.

Formation of the dye comprising the copper ferrocyanide pigment in the presence of a zeolite pigment gives a unique product which exhibits several advantages, including improved colour strength and opacity. A required degree of polarity, for example hydrophobicity or hydrophilicity may be provided. Polar or linking groups may be provided to facilitate molecular grafting or bonding. Compatibility with application media such as organic or aqueous solvents or oils is enhanced.

The ferrocyanide derivatives which may be employed can be functionalised with one or more of the following classes of dyes (D):
1) Diarylmethane type dyes such as Basic yellow 37
2) Azomethane type dyes such as Basic Yellow 65
3) Monoazo type dyes such as Basic orange 59
4) Xanthene type dyes including all Rhodamine dyes
5) Triarylmethane type dyes such as Victoria Blue
6) Coumarin type dyes such as Basic yellow 40

More specifically the dye (D) may be selected from:
basic blue 1, 3, 7, 9, 11, 26, 41, 54 and 162;
basic violet 1, 3,10, 14, 16 and 53;
basic green 1 and 4;
basic orange 2 and 21;
basic brown 1 and 4;
basic red 7, 13, 14, 18, 22, 29, 46, and 51;
basic yellow 2, 5, 11, 13, 19, 24, 28, 29, 30, 37, 40 and 51;
basic red 1, 1:1, 7, 11, 13, 14, 18, 22, 29, 46, and 51;
and mixtures thereof.

Alternative complex polyacids (A in formula 2) include :-
i) silicon, molybdenum, and / or tungsten (SMT) complexes.
ii) phosphorus, molybdenum, and / or tungsten (PTM) complexes.

The proportions may be as follows:
1) SMT series :- SiO₂: MO₃ is about 1:(7-12) depending on the quality requirement.
2) PTM series: - P₂O₅ : MO₃ is about 1:(16-24) depending on the quality requirement.

In the above ratios, M represents the combined molecular total of molybdenum and tungsten.

The polyacids normally exist as a mixture of simple and complex acids, such as H₂MoO₄, H₂WO₄, H₃PO₄, H₂SiO₃, H₄Si₂Mo₂₄O₇₈, H₇Mo₂₄P₂O₄₂, H₆Mo₁₈P₂O₇₆, H₆Mo₂₄P₂O₈₀ etc and the mixtures thereof.

Preferred complex acids may be selected from H₂MoO₄, H₂WO₄, H₃PO₄, H₂SiO₂, H₄Si₂Mo₂₄,O₇₈, H₇Mo₁₂P₂O₄₂, H₆Mo₁₈P₂O₇₆, H₆Mo₂₄P₂O₈₀ and mixtures thereof.

In preferred methods a resin is added to the dyestuff to encapsulate the particles to improve surface properties and to reduce bleeding. Any alkali soluble abietic acid derivative can be used, preferably pentaerythritol modified resins such as Pentalyn K1626

A surfactant may be added to aid separation, settling and dispersion of the dyestuff. Nonionic surfactants maybe used, e.g. Disperse Ayd (trade mark of COGNIS) or Coloursperse 188A (trade mark of ICI).

The following quantities may be used in preferred embodiments of the invention

| | |
|---|---|
| zeolite | about 5 - 99%, preferably 70 - 99% |
| resin | about 1 - 20%, preferably 1 - 10%. |
| The sum of ferrocyanide, complex acid, metal and dye may be: | |
| | about 1 - 95%, preferably 1 - 40% |

Percentages and proportions in this specification are by weight unless indicated otherwise. Percentages and proportions are selected from the ranges disclosed to total 100%.

The solution of one or more dyes is preferably acidified to about pH 3.0 to 3.6. An organic acid, preferably a carboxylic acid, more preferably acetic or sulphamic acid may be used.

According to a second aspect of the present invention a pigment comprises a zeolite structure having absorbed thereon a ferrocyanide derivative substituted with one or more cationic dye groups.

Pigments in accordance with this invention find application in inks, coatings, polymers, including polyolefins, artistic materials including crayons and cosmetics.

The invention is further described by means of example but not in any limitative sense.

### Example 1 Ultramarine blue CF complex.

Glacial acetic acid (4.0g) was added to water (2200ml) at 70°C in a 4L Pyrex beaker. Methyl violet 2B (0. 5g) was added to the stirred solution. Victoria Blue BO (5.0g) was then added to the stirred solution. The mixture was then stirred well and the pH adjusted to pH 3.0 to 3.6 using acetic acid or caustic soda. Once the dye solution was stabilised, Ultramarine blue (100.0g) was then added with stirring and the pH was adjusted to 3.6+/- 0.1. The temperature was raised to 90°C, and 7.0g of copper sulphate dissolved in 300 ml of hot water at about 75-80°C was added. The complexing agent, in this case is an alkaline solution of sodium ferrocyanide stabilised with sodium sulphite. The sodium ferrocyanide solution was prepared by the dissolution of the following chemicals namely caustic soda (1.8g), sodium ferrocyanide (3.4g), followed by sodium sulphite (2.0g) in 400ml 0f water, and the resulting solution was heated to 70-80°C. The complex solution was then gradually titrated into the dye / copper mix at a rate of 8ml / minute. The end point was determined by spotting the precipitating dye mix on a No5 filter paper and checking for any excess dye by observing the intensity of the bleed. Trace of bleed was permitted as it is the migration of finer fractions of the pigment particles. Once the titration was complete, the pH was adjusted to 5.5, and the contents of the beaker was heated to 90-95°C and kept at this temperature range for 30 minutes to optimise the crystallisation of the pigment particles. After heat treatment process the solution was cooled to <70°C in preparation for resin treatment. Caustic soda pearl (3.8g) was stirred and resin Pentalyn K1626 (trademark of Hercules) (10.0g) was added with stirring and the solution was heated to 70°C - 80°C in order to prepare a clear resin solution. Finally the resin solution was added to the pigment slurry over a period of 20 minutes. A surfactant (Disperse Ayd W33-(1.0g) in water (50 ml) was added to the precipitated pigment slurry. The dispersion was then stirred for about 10 minutes and agitation was turned off. The liquor was allowed to settle for 2 hours, decanted, and filtered using No5 filter paper on a Buchner funnel. The filtered sample was dried in a convection oven at 70°C. The dried sample was milled, sieved and made into a dispersion. The dispersion was further evaluated for colour and other quality parameters.

### Example 2 Ultramarine pink CF Complex.

Glacial acetic acid (10.0 g) was added to water (2000ml) at 70°C in a 41 beaker. Rhodamine 6G (Basic red 1) 5.0g was added to the beaker with constant agitation at about 200 RPM. The solution mix was stirred to maintain the temperature and the pH was adjusted to 3.0 - 3.6 using acetic acid or caustic soda depending on the resultant pH. Once the dye solution is stabilised, Ultramarine pink (100.0g) was added slowly maintaining the constant agitation, and the pH was adjusted to 3.6+/- 0.1. The mix was stirred for about 20 minutes, and the temperature was raised to 90°C. In to the heated solution added (5.5g) of copper sulphate dissolved in 300ml of hot water at about 75 - 80°C. The complexing agent in this case was an alkaline solution of sodium ferrocyanide stabilised with sodium sulphite. The sodium ferrocyanide solution was prepared by the dissolution of the following chemicals namely, caustic soda (3:6g), sodium ferrocyanide (10.0g), followed by sodium sulphite (5.0g) in 300ml water, and the resulting solution was heated to 70-80°C. The complex solution was then gradually titrated into the dye / copper / UMP mix at a pace of S+/-1 ml per minute. The end point was determined by spotting the precipitating dye mix on a No5 filter paper and checking for any excess dye by observing the intensity of the bleed. Trace of bleed is permitted, as it is the migration of finer fractions of the pigment particles. Once the titration was complete, the pH was adjusted to 5.5, and the contents of the beaker was heated to 90°C+/-2°C and kept at this temperature range for 30 minutes to optimise the crystallisation of the particles. After heat treatment process the solution was cooled to <70°C in preparation for resin treatment. Caustic soda pearl (7.6g) was stirred, and resin Pentayn K1626 (trademark of Hercules) (20.0) was added with stirring and the solution was heated to 70°C - 80°C in order to prepare a clear resin solution. Finally the resin solution was added to the pigment slurry over a period of 20 minutes. A surfactant (Disperse Ayd W33 (2.0ml) was then added to the pigment slurry. The dispersion was then stirred for about 10 minutes and the agitation was turned off. The liquor was allowed to settle for 2 hours, decanted, and filtered on a No5 filter paper using a buchner funnel. Finally the filtered sample was dried on a convection oven at 70°C. The dried sample was milled, sieved, made into a dispersion, and tested for colour and other quality parameters.

### Example 3 Yellow Ferrocyanide / calcined clay / Basic yellow 40 complex.

Glacial acetic acid (10.0g) was added to water (2000ml) at 70°C in a 4L beaker. Basic yellow 40 (5.0g) was added to the beaker with constant agitation at 200 RPM. The solution mix was stirred to maintain the temperature and the pH was adjusted to 3.0 - 3.6 using acetic acid and caustic soda depending on the resultant pH. Once the dye solution is stabilised, calcined clay (100.0g) was added slowly maintaining the constant agitation, and the pH was adjusted to 3.6+/- 0.1. The mix was stirred for about 20 minutes, and the temperature was raised to 90°C. In to the heated solution was added (7.0g) of copper sulphate dissolved in 300ml of hot water at about 75 - 80°C. The complexing agent in this case was an alkaline solution of sodium ferrocyanide stabilised with sodium sulphite. The sodium ferrocyanide solution was prepared by the dissolution of the following chemicals, namely, caustic soda (2.0g), sodium ferrocyanide (7.8g), followed by sodium sulphite (2.0g), in 300ml water and the resulting solution was heated to 70 -80°C. The resulting solution was then gradually titrated in to the dye / copper / clay mix at a pace of 8+/- 1 per minute. The end point was determined by spotting the precipitating dye mix on a No5 filter paper and checking for any excess dye by observing the intensity of the bleed. Trace of bleed is permitted, as it is the migration of the finer fractions of pigment particles. Once the titration is complete, the pH was adjusted to 5.5, and the contents of the beaker is heated to 90°C+/-2°C and kept at this temperature range for 30 minutes to optimise the crystallisation of the particles. After heat treatment process the solution was cooled to <70°C in preparation for resin treatment. Caustic soda pearl (3.Sg) was stirred in, and resin Pentalyn K1626 (trademark of Hercules) (10.0g) was stirred in and the solution was gently heated to 70 - 80°C in order to prepare a clear resin solution. Finally the resin solution was added to pigment slurry over a period of 20 minutes. A surfactant (Disperse Ayd W33 (2.0ml) was then added to the pigment slurry. The dispersion was then stirred for about 10 minutes and the agitation was turned off. The liquor was then allowed to settle for 2 hours, decanted, and filtered on a No5 filter paper using a Buchner funnel. The filtered pigment was then dried in a convection oven at 70°C. The dried pigment sample was then milled, sieved, and made into an ink dispersion, and evaluated for colour and other properties.

### Example 4 Application Testing

The samples produced in the preceding Examples were evaluated for use in aqueous ink and paint applications using Holliday Pigment Ltd test methods 1.9.9 and 1.9.10 respectively. Shown in the following Tables are the colour characteristics of the pigments produced using the starting substrate as the reference standard.

**Table 1 Ink Application Test Method 1.9.9**

| **Pigment** | **L** | **a** | **b** | **DL** | **Da** | **Db** | **DE** | **% Str.** |
|---|---|---|---|---|---|---|---|---|
| UMBlue reference | 69.79 | 2.77 | -45.27 | | | | | |
| Example 1 | 45.00 | -12.29 | -39.32 | -24.80 | -15.06 | 5.95 | 29.61 | 801.47 |
| UMPink reference | 87.21 | 13.41 | -14.31 | | | | | |
| Example 2 | 70.77 | 55.30 | -18.72 | -16.44 | 41.89 | -4.41 | 45.21 | 1247.05 |
| Clay reference | 94.714 | 1.531 | -9.267 | | | | | |
| Example 3 | 94.408 | -21.934 | 53.183 | -0.306 | -23.465 | 62.449 | 66.713 | 2204.05 |

**Table 2 Paint Application Test Method 1.9.10**

| **Pigment** | **L** | **a** | **b** | **DL** | **Da** | **Db** | **DE** | **% Str.** |
|---|---|---|---|---|---|---|---|---|
| UMBlue reference | 68.35 | -0.51 | -34.64 | | | | | |
| Example 1 | 57.98 | -12.68 | -35.41 | -22.02 | -12.17 | -0.77 | 25.17 | 671.63 |
| UMPink reference | 84.25 | 14.99 | -6.41 | | | | | |
| Example 2 | 68.60 | 43.56 | -13.40 | -15.65 | 28.57 | -6.99 | 33.32 | 642.64 |
| Clay reference | 94.08 | -0.45 | 1.156 | | | | | |
| Example 3 | 86.463 | -6.696 | 48.568 | -7.585 | -6.246 | 47.412 | 48.419 | 3247.67 |

### Test Methods

### Summary of Test Method Number 1.9.9

This method is to assess the colour characteristics of pigments for use in aqueous inks and involves preparation of an ink followed by colour measurement after drawdown.

### Procedure

This procedure is applicable to both the standard (if available) and sample.

**Weigh into a clean and dry 4-oz glass jar the following components.**

| Quantity | g | % Weight |
|---|---|---|
| Joncryl 8085 | 23.61 | 47.21 |
| Water | 23.61 | 47.21 |
| Pigment on test | 2.5 | 5 |
| Matexil DA-AC | 0.21 | 0.42 |
| Dapro 1760 | 0.08 | 0.16 |
| Glass Beads 3mm | 50 | 100 |

Wrap some PTFE tape around the cap thread of the glass jar and secure lid.

Place test pigment and standard jar into the appropriate Scandex box and place in the Scandex and close the door.

Select program T2 on the Scandex control panel and shake for 3x10 minutes.

After thirty minutes remove from the Scandex and assess the jars for leaks and dispersion.

Loosen the lid, but do not remove, and allow contents to cool for up to 30 minutes.

Set the automatic draw down apparatus to speed 2 and draw down the paint onto matt Lenetta card using the K1 and K3 bars.

Note: Stop the machine before the bar runs off the end of the paper.

The K bars should be cleaned immediately in water.

Allow the sample cards to dry at ambient temperature for 2 hours.

After two hours compare the colour characteristics of the test sample against standard (if available) on the Gretag-Macbeth colorimeter.

### Summary of Test Method Number 1.9.10

This method is to assess the colour characteristics of pigments for use in aqueous paint applications. This test involves dispersing the pigment in Dulux Medium base matt paint at 5% loading and measuring colour characteristics against a standard if available.

### Procedure

This Procedure is applicable to both the standard (if available) and sample.

**Weigh into a clean and dry 100ml plastic pot the following components.**

| Quantity | g | % Weight |
|---|---|---|
| Pigment | 2.5 | 5.0 |
| Dulux Matt Medium base paint | 47.5 | 95 |
| 3 mm glass beads | 20 | 40 |

Place pot in the Flactek mixer. Set the mixer at 3000rpm and 2x1 minute spin cycles. Mix the contents by hand in between 1 minute spins.

Ensure that pigment is fully dispersed.

Set the automatic draw down apparatus to speed 2.5 and draw down the paint onto matt Lenetta card using the K6 bar.

**Note**: Stop the machine before the bar runs off the end of the paper.

The K6 bar should be cleaned immediately in water.

Allow the sample cards to dry at ambient temperature for 2 hours.

After two hours compare the colour characteristics of the test sample against standard if available on the Gretag-Macbeth colorimeter.

## Claims

1. A method of making a pigment composition, comprising the step of making a pigment selected from:
(i) a ferrocyanide derivative substituted with one or more cationic dye groups in the presence of a suspension of a zeolite pigment in an acidified solution; and
(ii) a derivative of a complex acid selected from the group consisting of: silicomolybdate, phosphomolybdate, phosphotungstate, phosphotungstomolybdate and mixtures thereof, substituted with one or more cationic dye groups in the presence of a suspension of a zeolite pigment in an acidified solution.

2. A method as claimed in claim 1, wherein the ferrocyanide derivative has the formula (1):
Mₚ(Fe(CN)₆)(Z)_{q}(D)ᵣ (1)
wherein M is a transition metal selected from a copper, nickel or vanadium in a reduced state;
Z is a zeolite structure, preferably a zeolite pigment or calcined clay, more preferably an ultramarine base;
D is a cationic dye;
and p, q and r are integers from 1 to 3 wherein the total of p + q + r = 4.

3. A method as claimed in claim 1, wherein the complex acid derivative has the formula (2):
A(Z)_{q}(D)_{R} (2);
wherein A is a complex acid;
Z and D are as defined in formula 1; and
q and r are integers from 1 to 3 wherein the total of q+r = 4 to 7.

4. A method as claimed in any preceding claim, wherein the pigment is selected from ultramarine blue, ultramarine pink, ultramarine violet and ultramarine green and mixtures thereof.

5. A method as claimed in claim 4 wherein the zeolite pigment is ultramarine blue.

6. A method as claimed in any of claims 1, 2, 4 and 5, wherein the ferrocyanide derivative is functionalised with a dye selected from the following groups:
Diarylmethane type dyes such as Basic yellow 37
Azomethane type dyes such as Basic Yellow 65
Monoazo type dyes such as Basic orange 59
Xanthene type dyes including all Rhodamine dyes
Triarylmethane type dyes such as Victoria Blue
Coumarin type dyes such as Basic yellow 40

7. A method as claimed in any of claims 1, 2, 4, 5 and 6, wherein the ferrocyanide derivative is functionalised with a basic dye selected from:
basic blue 1, 3, 7, 9, 11, 26, 41, 54 and 162;
basic violet 1, 3,10, 14, 16 and 53;
basic green 1 and 4;
basic orange 2 and 21;
basic brown 1 and 4;
basic red 7, 13, 14, 18, 22, 29, 46, and 51;
basic yellow 2, 5, 11, 13, 19, 24, 28, 29, 30, 37, 40 and 51;
basic red 1, 1:1, 7, 11, 13, 14, 18, 22, 29, 46, and 51; and mixtures thereof.

8. A method as claimed in claim 3, wherein the complex acid is selected from:
i) silicon, molybdenum, and / or tungsten (SMT) complexes; and
ii) phosphorus, molybdenum, and / or tungsten (PTM) complexes.

9. A method as claimed in claim 8, wherein the proportion of
SiO₂ : MO₃ is 1:(7-12); or the proportion of
P₂O₅: MO₃ is 1:(16-24);
wherein M represents the combined molecular total of molybdenum and tungsten.

10. A method as claimed in claim 3 wherein the complex acid derivative is functionalised with a dye selected from the following groups:
Diarylmethane type dyes such as Basic yellow 37
Azomethane type dyes such as Basic Yellow 65
Monoazo type dyes such as Basic orange 59
Xanthene type dyes including all Rhodamine dyes
Triarylmethane type dyes such as Victoria Blue
Coumarin type dyes such as Basic yellow 40

11. A method as claimed in claim 3, or any claim dependent on claim 3, wherein the complex acid derivative is functionalised with a basic dye selected from:
basic blue 1, 3, 7, 9, 11, 26, 41, 54 and 162;
basic violet 1, 3,10, 14, 16 and 53;
basic green 1 and 4;
basic orange 2 and 21;
basic brown 1 and 4;
basic red 7, 13, 14, 18, 22, 29, 46, and 51;
basic yellow 2, 5, 11, 13, 19, 24, 28, 29, 30, 37, 40 and 51;
basic red 1, 1:1, 7, 11, 13, 14, 18, 22, 29, 46, and 51; and mixtures thereof.

12. A method as claimed in any preceding claim, further comprising an additional step of resination, wherein the resin is an alkali soluble abietic acid derivative.

13. A method as claimed in claim 12, wherein the resin is a pentaerythritol modified resin.

14. A method as claimed in any preceding claim, including the step of adding a surfactant.

15. A method as claimed in claim 14, wherein the surfactant is a non-ionic surfactant.

16. A method as claimed in any preceding claim, wherein the quantity of zeolite is in the range of 5%-99%.

17. A method as claimed in claim 16 wherein the quantity of zeolite is in the range 70%-99%.

18. A method as claimed in any preceding claim, wherein the sum of the quantity of ferrocyanide, complex acid and dye is in the range of 1%-95%.

19. A method as claimed in claim 18, wherein the sum of the quantity of ferrocyanide, complex acid, metal and dye is in the range of 1%-30%.

20. A method as claimed in any preceding claim, wherein the amount of resin is in the range of 1%-20%.

21. A method as claimed in claim 20, wherein the amount of resin is in the range 1%-10%.

22. A method as claimed in any preceding claim wherein sulphamic acid is used to acidify the dye

23. A method as claimed in any of claims 1 -21 wherein a carboxylic acid is used to acidify the dye

24. A method as claimed in claim 23, wherein acetic acid is used to acidify the dye

## Patentansprüche

1. Verfahren zur Herstellung einer Pigmentzusammensetzung, umfassend den Schritt der Herstellung eines Pigments, ausgewählt aus:
(i) einem Ferrocyanidderivat, substituiert mit einer oder mehreren kationischen Farbstoffgruppen, in Gegenwart einer Suspension eines Zeolithpigments in einer angesäuerten Lösung; und
(ii) einem Derivat einer Komplexsäure, ausgewählt aus der Gruppe, bestehend aus Silicomolybdat, Phosphomolybdat, Phosphowolframat, Phosphowolframatomolybdat und Mischungen davon, substituiert mit einer oder mehreren kationischen Farbstoffgruppen, in Gegenwart einer Suspension eines Zeolithpigments in einer angesäuerten Lösung.

2. Verfahren gemäß Anspruch 1, wobei das Ferrocyanidderivat die Formel (1) besitzt:
Mₚ(Fe(CN)₆) (Z)_{q}(D)ᵣ (1)
worin M ein Übergangsmetall ist, ausgewählt aus Kupfer, Nickel oder Vanadium in reduziertem Zustand;
Z eine Zeolithstruktur ist, vorzugsweise ein Zeolithpigment oder calcinierter Ton, stärker bevorzugt eine Ultramarinbasis ;
D ein kationischer Farbstoff ist;
und p, q und r ganze Zahlen von 1 bis 3 sind, wobei die Summe aus p + q + r = 4 ist.

3. Verfahren gemäß Anspruch 1, wobei das Komplexsäurederivat die Formel (2) besitzt:
A(Z)_{q}(D)_{R}
worin A eine Komplexsäure ist;
Z und D wie in Formel 1 definiert sind; und
q und r ganze Zahlen von 1 bis 3 sind, wobei die Summe aus q + r = 4 bis 7 ist.

4. Verfahren gemäß einem beliebigen der vorstehenden Ansprüche, wobei das Pigment ausgewählt ist aus Ultramarinblau, Ultramarinpink, Ultramarinviolett und Ultramaringrün und Mischungen davon.

5. Verfahren gemäß Anspruch 4, wobei das Zeolithpigment Ultramarinblau ist.

6. Verfahren gemäß einem beliebigen der Ansprüche 1, 2, 4 und 5, wobei das Ferrocyanidderivat mit einem Farbstoff funktionalisiert ist, ausgewählt aus den folgenden Gruppen:
Diarylmethantyp-Farbstoffe wie z.B. Basischgelb 37
Azomethantyp-Farbstoffe wie z.B. Basischgelb 65
Monazotyp-Farbstoffe wie z.B. Basischorange 59
Xanthentyp-Farbstoffe einschließlich aller Rhodaminfarbstoffe Triarylmethantyp-Farbstoffe wie z.B. Viktoriablau
Cumarintyp-Farbstoffe wie z.B. Basischgelb 40.

7. Verfahren gemäß einem beliebigen der Ansprüche 1, 2, 4, 5 und 6, wobei das Ferrocyanidderivat mit einem basischen Farbstoff funktionalisiert ist, ausgewählt aus:
Basischblau 1, 3, 7, 9, 11, 26, 41, 54 und 162;
Basischviolett 1, 3, 10, 14, 16 und 53;
Basischgrün 1 und 4;
Basischorange 2 und 21;
Basischbraun 1 und 4;
Basischrot 7, 13, 14, 18, 22, 29, 46 und 51;
Basischgelb 2, 5, 11, 13, 19, 24, 28, 29, 30, 37, 40 und 51;
Basischrot 1, 1:1, 7, 11, 13, 14, 18, 22, 29, 46 und 51; und
Mischungen davon.

8. Verfahren gemäß Anspruch 3, wobei die Komplexsäure ausgewählt ist aus:
(i) Silizium-, Molybdän-, und/oder Wolfram-(SMT)-Komplexen; sowie
(ii) Phosphor-, Molybdän-, und/oder Wolfram-(PTM)-Komplexen.

9. Verfahren gemäß Anspruch 8, wobei das Verhältnis von
SiO₂:MO₃ 1:(7-12) ist; oder das Verhältnis von
P₂O₅:MO₃ 1: (16-24) ist;
worin M die kombinierte molekulare Summe aus Molybdän und Wolfram verkörpert.

10. Verfahren gemäß Anspruch 3, wobei das Komplexsäurederivat mit einem Farbstoff funktionalisiert ist, ausgewählt aus den folgenden Gruppen:
Diarylmethantyp-Farbstoffe wie z.B. Basischgelb 37
Azomethantyp-Farbstoffe wie z.B. Basischgelb 65
Monazotyp-Farbstoffe wie z.B. Basischorange 59
Xanthentyp-Farbstoffe einschließlich aller Rhodaminfarbstoffe Triarylmethantyp-Farbstoffe wie z.B. Viktoriablau
Cumarintyp-Farbstoffe wie z.B. Basischgelb 40.

11. Verfahren gemäß Anspruch 3 oder einem beliebigen von Anspruch 3 abhängigen Anspruch, wobei das Komplexsäurederivat mit einem basischen Farbstoff funktionalisiert ist, ausgewählt aus:
Basischblau 1, 3, 7, 9, 11, 26, 41, 54 und 162;
Basischviolett 1, 3, 10, 14, 16 und 53;
Basischgrün 1 und 4;
Basischorange 2 und 21;
Basischbraun 1 und 4;
Basischrot 7, 13, 14, 18, 22, 29, 46 und 51;
Basischgelb 2, 5, 11, 13, 19, 24, 28, 29, 30, 37, 40 und 51;
Basischrot 1, 1:1, 7, 11, 13, 14, 18, 22, 29, 46 und 51; und
Mischungen davon.

12. Verfahren gemäß einem beliebigen der vorstehenden Ansprüche, des Weiteren umfassend einen zusätzlichen Schritt der Verharzung, wobei das Harz ein Alkali-lösliches Abietinsäurederivat ist.

13. Verfahren gemäß Anspruch 12, wobei das Harz ein Pentaerythrit-modifiziertes Harz ist.

14. Verfahren gemäß einem beliebigen der vorstehenden Ansprüche, einschließlich des Schritts der Zugabe eines Tensids.

15. Verfahren gemäß Anspruch 14, wobei das Tensid ein nichtionisches Tensid ist.

16. Verfahren gemäß einem beliebigen der vorstehenden Ansprüche, wobei die Menge an Zeolith im Bereich von 5% bis 99% liegt.

17. Verfahren gemäß Anspruch 16, wobei die Menge an Zeolith im Bereich von 70% bis 99% liegt.

18. Verfahren gemäß einem beliebigen der vorstehenden Ansprüche, wobei die Summe der Menge von Ferrocyanid, Komplexsäure und Farbstoff im Bereich von 1%-95% liegt.

19. Verfahren gemäß Anspruch 18, wobei die Summe der Menge von Ferrocyanid-Komplexsäure, Metall und Farbstoff im Bereich von 1% bis 30% liegt.

20. Verfahren gemäß einem beliebigen der vorstehenden Ansprüche, wobei die Harzmenge im Bereich von 1%-20% liegt.

21. Verfahren gemäß Anspruch 20, wobei die Harzmenge im Bereich von 1% bis 10% liegt.

22. Verfahren gemäß einem beliebigen der vorstehenden Ansprüche, wobei Sulfaminsäure zum Ansäuern des Farbstoffs verwendet wird.

23. Verfahren gemäß einem beliebigen der Ansprüche 1 bis 21, wobei eine Carbonsäure zum Ansäuern des Farbstoffs verwendet wird.

24. Verfahren gemäß Anspruch 23, wobei Essigsäure zum Ansäuern des Farbstoffs verwendet wird.

## Revendications

1. Procédé de formation d'une composition de pigment, comprenant l'étape consistant à former un pigment choisi parmi :
(i) un dérivé de ferrocyanure substitué par un ou plusieurs groupes de teinte cationique en présence d'une suspension d'un pigment zéolite dans une solution acidifiée ; et
(ii) un dérivé d'un acide complexe choisi dans le groupe constitué par : le silicomolybdate, le phosphomolybdate, le phosphotungstate, le phosphotungstomolybdate et des mélanges de ceux-ci, substitué par un ou plusieurs groupes de teinte cationique en présence d'une suspension d'un pigment zéolite dans une solution acidifiée.

2. Procédé selon la revendication 1, dans lequel le dérivé de ferrocyanure présente la formule (1) :
Mₚ(Fe(CN)₆)(Z)_{q}(D)ᵣ (1)
dans laquelle M est un métal de transition choisi parmi le cuivre, le nickel ou le vanadium dans un état réduit ;
Z est une structure de zéolite, de préférence un pigment zéolite ou une argile cuite, de manière davantage préférée une base outremer ;
D est une teinte cationique ;
et p, q et r sont des entiers de 1 à 3 où le total de p + q + r = 4.

3. Procédé selon la revendication 1, dans lequel le dérivé d'acide complexe présente la formule (2) :
A(Z)_{q}(D)_{R} (2)
dans laquelle A est un acide complexe ;
Z et D sont tels que définis dans la formule 1 ; et
q et r sont des entiers de 1 à 3 où le total de q + r = 4 à 7.

4. Procédé selon l'une quelconque des revendications précédentes, dans lequel le pigment est choisi parmi le bleu d'outremer, le rose d'outremer, le violet d'outremer et le vert d'outremer et des mélanges de ceux-ci.

5. Procédé selon la revendication 4, dans lequel le pigment zéolite est du bleu d'outremer.

6. Procédé selon l'une quelconque des revendications 1, 2, 4 et 5, dans lequel le dérivé de ferrocyanure est fonctionnalisé par une teinte choisie parmi les groupes suivants :
teintes de type diarylméthane telles que le jaune basique 37
teintes de type azométhane telles que le jaune basique 65
teintes de type monoazoïque telles que l'orange basique 59
teintes de type xanthène comprenant toutes les teintes rhodamine
teintes de type triarylméthane telles que le bleu victoria
teintes de type coumarine telles que le jaune basique 40.

7. Procédé selon l'une quelconque des revendications 1, 2, 4, 5 et 6, dans lequel le dérivé de ferrocyanure est fonctionnalisé par une teinte basique choisie parmi :
bleu basique 1, 3, 7, 9, 11, 26, 41, 54 et 162 ;
violet basique 1, 3, 10, 14, 16 et 53 ;
vert basique 1 et 4 ;
orange basique 2 et 21 ;
marron basique 1 et 4 ;
rouge basique 7, 13, 14, 18, 22, 29, 46 et 51 ;
jaune basique 2, 5, 11, 13, 19, 24, 28, 29, 30, 37, 40 et 51 ;
rouge basique 1, 1 : 1, 7, 11, 13, 14, 18, 22, 29, 46 et 51 ; et des mélanges de ceux-ci.

8. Procédé selon la revendication 3, dans lequel l'acide complexe est choisi parmi :
i) des complexes de silicium, de molybdène et/ou de tungstène (SMT) ; et
ii) des complexes de phosphore, de molybdène et/ou de tungstène (PTM).

9. Procédé selon la revendication 8, dans lequel la proportion de
SiO₂ : MO₃ est de 1 : (7 à 12) ; ou la proportion de
P₂O₅ : MO₃ est de 1 : (16 à 24) ;
où M représente le total moléculaire combiné de molybdène et de tungstène.

10. Procédé selon la revendication 3, dans lequel le dérivé d'acide complexe est fonctionnalisé par une teinte choisie parmi les groupes suivants :
teintes de type diarylméthane telles que le jaune basique 37
teintes de type azométhane telles que le jaune basique 65
teintes de type monoazoïque telles que l'orange basique 59
teintes de type xanthène comprenant toutes les teintes rhodamine
teintes de type triarylméthane telles que le bleu victoria
teintes de type coumarine telles que le jaune basique 40.

11. Procédé selon la revendication 3, ou toute revendication dépendant de la revendication 3, dans lequel le dérivé d'acide complexe est fonctionnalisé par une teinte basique choisie parmi :
bleu basique 1, 3, 7, 9, 11, 26, 41, 54 et 162;
violet basique 1, 3, 10, 14, 16 et 53;
vert basique 1 et 4 ;
orange basique 2 et 21 ;
marron basique 1 et 4 ;
rouge basique 7, 13, 14, 18, 22, 29, 46 et 51 ;
jaune basique 2, 5, 11, 13, 19, 24, 28, 29, 30, 37, 40 et 51 ;
rouge basique 1, 1 : 1, 7, 11, 13, 14, 18, 22, 29, 46 et 51 ; et des mélanges de ceux-ci.

12. Procédé selon l'une quelconque des revendications précédentes, comprenant en outre une étape additionnelle de résination, dans lequel la résine est un dérivé d'acide abiétique soluble dans un alcali.

13. Procédé selon la revendication 12, dans lequel la résine est une résine modifiée par pentarérythritol.

14. Procédé selon l'une quelconque des revendications précédentes, comprenant l'étape consistant à ajouter un agent tensioactif.

15. Procédé selon la revendication 14, dans lequel l'agent tensioactif est un agent tensioactif non ionique.

16. Procédé selon l'une quelconque des revendications précédentes, dans lequel la quantité de zéolite se trouve dans la plage de 5 % à 99 %.

17. Procédé selon la revendication 16, dans lequel la quantité de zéolite se trouve dans la plage de 70 % à 99 %.

18. Procédé selon l'une quelconque des revendications précédentes, dans lequel la somme de la quantité de ferrocyanure, d'acide complexe et de teinte se trouve dans la plage de 1 % à 95 %.

19. Procédé selon la revendication 18, dans lequel la somme de la quantité de ferrocyanure, d'acide complexe, de métal et de teinte se trouve dans la plage de 1 % à 30 %.

20. Procédé selon l'une quelconque des revendications précédentes, dans lequel la quantité de résine se trouve dans la plage de 1 % à 20 %.

21. Procédé selon la revendication 20, dans lequel la quantité de résine se trouve dans la plage de 1 % à 10 %.

22. Procédé selon l'une quelconque des revendications précédentes, dans lequel l'acide sulfamique est utilisé pour acidifier la teinte.

23. Procédé selon l'une quelconque des revendications 1 à 21, dans lequel un acide carboxylique est utilisé pour acidifier la teinte.

24. Procédé selon la revendication 23, dans lequel l'acide acétique est utilisé pour acidifier la teinte.
